# EUROPÄISCHE PATENTANMELDUNG

(11) **EP 3 955 420 A1**
(43) Veröffentlichungstag der Anmeldung: **16.02.2022**
(21) Anmeldenummer: 20191126.0
(22) Anmeldetag: 14.08.2020
(51) Int. Cl.: H02K 1/02, H02K 7/116, B25J 9/10, B25J 9/06

(54) **ANTRIEB FÜR EINE ROBOTERACHSE**

(71) Anmelder: Siemens Aktiengesellschaft, 80333 München (DE)
(72) Erfinder: Potoradi, Detlef, 97616 Bad Neustadt/Saale (Mühlbach) (DE); Vollmer, Rolf, 36129 Gersfeld (DE)

(57) **Zusammenfassung**

Die Erfindung betrifft einen Antrieb für eine Roboterachse (11), aufweisend: eine dynamoelektrische Maschine (10), wobei die dynamoelektrische Maschine (10) eine Polpaarzahl p ≥ 4 aufweist und ein Getriebe (12), wobei das Getriebe (12) selbsthemmend ausgebildet ist. Die Erfindung betrifft ferner eine Roboterachse (11) sowie einen Roboter (1).

## Beschreibung

Die Erfindung betrifft einen Antrieb für eine Roboterachse.

Antriebe für Roboter, insbesondere für kollaborative Roboter, müssen aus Sicherheitsgründen derart ausgebildet sein, dass bewegte Massen und/oder Gliedmaßen des Roboters bei einem Stromausfall zum Stillstand kommen bzw. in Position gehalten werden. Hierfür werden bisher Bremsen eingesetzt.

Ein Einsatz von Bremsen ist jedoch nachteilig für einen Wirkungsgrad des Antriebs. Zudem bringt ein Verschleiß der Bremsen einen hohen Wartungsaufwand mit sich. Ferner sollen Antriebe für Roboterachsen besonders effizient sein und einen hohen Wirkungsgrad aufweisen.

Der Erfindung liegt die Aufgabe zugrunde, einen Antrieb für einen Roboter dahingehend zu verbessern.

Die Lösung der Aufgabe gelingt durch Anspruch 1, d. h. einen Antrieb für eine Roboterachse, aufweisend:
- eine dynamoelektrische Maschine, wobei die dynamoelektrische Maschine eine Polpaarzahl p ≥ 4 aufweist,
- ein Getriebe, wobei das Getriebe selbsthemmend ausgebildet ist.

Die Maschine weist demnach eine Polzahl 2p >= 8 auf. Die dynamoelektrische Maschine ist vorteilhaft eine dynamoelektrische rotatorische Maschine.

Die dynamoelektrische Maschine ist vorzugsweise ein Elektromotor.

Die Erfindung eignet sich besonders gut für kollaborative Roboter. Ein kollaborativer Roboter ist derart gestaltet, dass eine Zusammenarbeit mit Menschen ohne trennende Schutzeinrichtung, vorzugsweise in einem Raum, möglich ist. Dies eröffnet völlig neue Anwendungsmöglichkeiten. Der kollaborative Roboter ergänzt die Fähigkeiten des Menschen und es wird eine Automatisierung von zuvor manuell ausgeführten Produktionsschritten ermöglicht.

Die Erfindung bietet den Vorteil, dass für eine Zusammenarbeit von Roboter und Mensch nötige Sicherheitsanforderungen erfüllt werden können.

Die Erfindung bietet den Vorteil, dass bewegte Massen und Gliedmaßen bei Stromausfall zum Stillstand kommen oder in einer sicheren Position gehalten werden.

Die Erfindung eignet sich jedoch auch für verschiedene andere Anwendungen. Sie kann beispielsweise in einem Exoskelett eingesetzt werden.

In einer vorteilhaften Ausführung weist ein Rotor der dynamoelektrischen Maschine Permanentmagnete auf.

Die dynamoelektrische Maschine ist vorzugsweise eine permanenterregte Synchronmaschine. Es ist jedoch auch denkbar, dass die dynamoelektrische Maschine eine Hybriderregung aufweist. Dies gelingt durch eine permanenterregte Synchronmaschine mit einem zusätzlichen Reluktanzmoment.

In einer vorteilhaften Ausführung weist die dynamoelektrische Maschine eine Polpaarzahl p ≥ 8 auf.

Eine derartig hochpolige Maschine ist von Vorteil, da dadurch eine hohe Drehmomentdichte erreichbar ist.

Ferner ist es denkbar, dass die dynamoelektrische Maschine eine Polpaarzahl 50 ≥ p ≥ 40 aufweist.

In einer vorteilhaften Ausführung weist ein Stator der dynamoelektrischen Maschine eine Mehrzahl von Materiallagen auf, wobei die Materiallagen einen derartigen Eisengehalt aufweisen, dass eine Hystereseziffer von < 1 W/kg erreichbar ist.

Eine derartige Hystereseziffer ist durch nur einen geringen oder gar keinen Legierungsgehalt der Materiallage erreichbar.

Besonders bevorzugt weist die Materiallage Reineisen auf. Aus technischen Gründen ist jedoch ein geringer Legierungsgehalt wahrscheinlich. Vorteilhaft machen Legierungsbestandteile jedoch weniger als 1% des Materials aus.

Die Materiallage ist z. B. mittels des in EP 3595148 A1 beschriebenen Verfahrens herstellbar. Die Herstellung einer Materiallage mit einer Lagendicke zwischen 0,5 und 500 µm gelingt durch folgende Schritte: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung.

Der Legierungsbestandteil ist z. B. Phosphat. Dies ist beispielsweise ein Hilfsmittel für die Sinterung.

In einer vorteilhaften Ausführung ist die Materiallage derart dünn ausgeführt, dass eine Wirbelstromziffer von < 0,4 W/kg erreichbar ist.

Eine Materiallage ist vorteilhaft dünner als 150 µm.

Die Hystereseziffer und die Wirbelstromziffer werden vorteilhaft bei einer Flussdichte von 1 T und einer Frequenz von 50 Hz gemessen.

Die Materiallagen erfüllen die Aufgaben und Funktionen eines Blechs. Die Materiallagen können Bleche sein. Durch die verlustarmen Materiallagen hat die Maschine einen hohen Wirkungsgrad und eine hohe Leistungsdichte.

In einer vorteilhaften Ausführung sind die Materiallagen derart ausgebildet, dass eine Polarisierbarkeit B25 der Materiallagen > 1,6 T ist.

Die Polarisierbarkeit B25 beschreibt hierbei eine Flussdichte bei 25 A/cm.

Dies gelingt durch einen nur geringen Legierungsgehalt.

Die hohe Polarisierbarkeit wirkt sich positiv auf eine Drehmomentdichte aus.

In einer vorteilhaften Ausführung ist das Getriebe ein Schraubgetriebe oder ein Zahnradgetriebe oder eine Kombination aus Schraubgetriebe und Zahnradgetriebe.

In einer vorteilhaften Ausführung ist das Getriebe als Schneckengetriebe mit wenigstens einer Getriebestufe ausgebildet.

Durch die Verwendung des selbsthemmenden Getriebes, vorzugsweise des Schneckengetriebes, wird gewährleistet, dass sowohl die Massen des Roboters als auch durch den Roboter mitgeführte Massen bei Stromausfall sicher abgebremst werden oder sicher gehalten werden.

Zur Vermeidung hoher Kräfte, kann das Getriebe mit einer Rutschkupplung oder einer Feder-Dämpfer-Scheibe ausgestattet werden.

Schneckengetriebe sind vor allem dann von Vorteil, wenn eine große Übersetzung erforderlich ist. Mit einem Schneckengetriebe ist ein großes Gesamtverhältnis mit wenig Stufen erreichbar. So kann ein kleineres und günstiges Getriebe verwendet werden.

In einer vorteilhaften Ausführung weist das Getriebe genau eine Getriebestufe auf.

Dies ist vorteilhaft, da dadurch ein wenigstens im Wesentlichen spielfreies System ermöglicht wird. Dies ist für einen Wechsel von einem Rechtslauf auf einen Linkslauf des Antriebs hilfreich. Dies ist mitunter auch für einen Antrieb wichtig, der in einem Exoskelett eingesetzt ist, da dort ein Wechsel der Laufrichtung sofort umgesetzt werden muss.

In einer vorteilhaften Ausführung weist das Getriebe ein Übersetzungsverhältnis zwischen 60 und 250 auf.

Vorteilhaft liegt das Übersetzungsverhältnis zwischen 60 und 160.

Eine derartige Übersetzung ist vorteilhaft, da dadurch Kraft und Drehmoment der Maschine verstärkt werden.

Das einstufige Getriebe ist geräuscharm. Dies ist besonders für kollaborative Roboter von Vorteil.

In einer vorteilhaften Ausführung ist ein Zahnrad des Getriebes um einen Winkel von < 360° bewegbar.

In einer vorteilhaften Ausführung ist ein Zahnrad des Getriebes um einen Winkel von < 180° bewegbar.

Dies ermöglicht einen guten Bewegungswinkel der Roboterachse.

Die Lösung der oben gestellten Aufgabe gelingt ferner durch Anspruch 13, d. h. eine Roboterachse, wobei die Roboterachse um einen Bewegungswinkel von < 360° bewegbar ist.

In einer vorteilhaften Ausführung ist die Roboterachse um einen Bewegungswinkel von < 180° bewegbar.

Es ist denkbar, dass die Roboterachse um eine Achse rotierbar ist. Aus Sicherheitsgründen ist jedoch ein kleinerer Bewegungswinkel als Anschlag hilfreich.

Die Lösung der Aufgabe gelingt überdies durch Anspruch 15, d. h. einen Roboter, insbesondere kollaborativer Roboter, aufweisend eine derartige Roboterachse.

Der Antrieb weist vorteilhaft keine Bremse auf. Die Selbsthemmung des Getriebes ist ausreichend, um ein sicheres Verhalten des Roboters im Falle eines Stromausfalls zu gewährleisten.

Durch den Entfall der Bremse werden keine Bremsenleitungen und Stecker benötigt. So können Kosten gespart werden. Es entfallen überdies Verluste der Bremse, was zu einem höheren Drehmoment der Maschine führt. Zudem ist ein Lagerabstand verringert, wodurch die Maschine steifer ist. Dies führt zu geringeren Schwingungen und Geräuschen.

Im Folgenden wird die Erfindung anhand der in den Figuren beschriebenen Ausführungsbeispiele näher beschrieben und erläutert. Es zeigen:
- FIG 1: einen kollaborativen Roboter,
- FIG 2 und FIG 3: ein selbsthemmendes Getriebe.

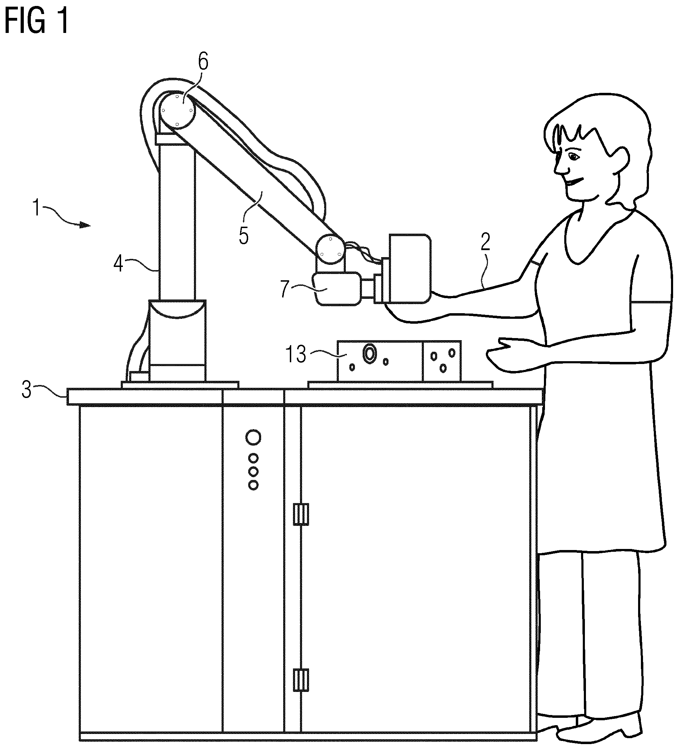

FIG 1 zeigt einen kollaborativen Roboter 1. Der Roboter 1 arbeitet mit einer Person 2 zusammen. Der Roboter 1 ergänzt die Fähigkeiten der Person 2 bei einer Bearbeitung eines Werkstücks 13. Das Werkstück liegt auf einem Arbeitstisch 3 auf und wird durch ein Werkzeug 7 bearbeitet.

Der Roboter 1 umfasst einen Oberarm 4 und einen Unterarm 5. Sie sind durch ein Gelenk 6 miteinander verbunden.

Der Einsatz eines kollaborativen Roboters eröffnet beispielsweise in einer Fabrikautomation, z. B. bei Fertigungsprozessen wie Montage, Verpackung und Palettierung, neue Möglichkeiten.

In derartigen kollaborativen Roboteranwendungen lassen sich Vorteile des Menschen, z. B. Flexibilität, Urteilsvermögen, Kreativität, Erfahrung, Intuition und Überblick, und Vorteile des Roboters, insbesondere Ausdauer, Präzision und Stärke, verbinden. Zum Einsatz kommt bei der kollaborativen Robotik oft ein speziell entwickelter Roboter (auch Cobot genannt). Dies ist meist ein Leichtbauroboter. Es besteht ferner die Möglichkeit, für eine Mensch-Roboter-Kollaboration speziell abgesicherte Industrieroboter einzusetzen.

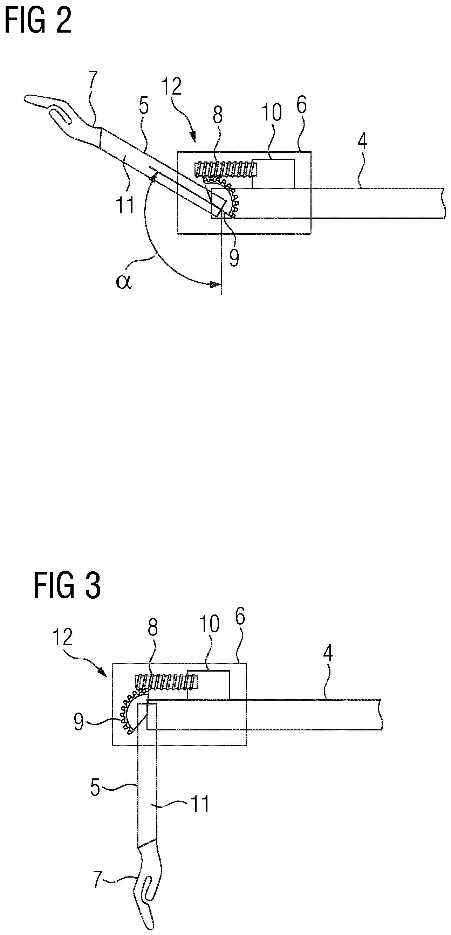

FIG 2 und FIG 3 zeigen ein selbsthemmendes Getriebe 12, welches im Gelenk 6 angeordnet ist. Das Getriebe 12 ist in der Figur als Schneckengetriebe ausgebildet. Das Schneckengetriebe umfasst eine Schneckenwelle 8 und ein Zahnrad 9. Das Getriebe 12 weist eine Getriebestufe auf.

Durch einen Motor 10 und das Getriebe wird der Unterarm 5 relativ zum Oberarm 4 bewegt. Ein Bewegungswinkel von α < 180° ist hierbei von Vorteil. Eine zu bewegende Roboterachse 11 ist z. B. der Unterarm 5.

Das Zahnrad 9 des Schneckengetriebes ist hierzu vorteilhaft als Zahnradsegment ausgebildet.

Bei einer Kinematik über Schubstangen wird aus dem Zahnrad 9 eine Zahnstange (nicht dargestellt).

Das Zahnrad 9 weist vorteilhaft gehärteten Stahl und/oder Keramik auf. Im Getriebe vorhandenes Schmieröl weist vorteilhaft, vorzugsweise zu einem überwiegenden Teil, Fullerenen (insbesondere C60-Moleküle) auf.

## Patentansprüche

1. Antrieb für eine Roboterachse (11), aufweisend:
- eine dynamoelektrische Maschine (10), wobei die dynamoelektrische Maschine (10) eine Polpaarzahl p ≥ 4 aufweist,
- ein Getriebe (12), wobei das Getriebe (12) selbsthemmend ausgebildet ist.

2. Antrieb nach Anspruch 1, wobei ein Rotor der dynamoelektrischen Maschine (10) Permanentmagnete aufweist.

3. Antrieb nach einem der vorhergehenden Ansprüche, wobei die dynamoelektrische Maschine (10) eine Polpaarzahl p ≥ 8 aufweist.

4. Antrieb nach einem der vorhergehenden Ansprüche, wobei ein Stator der dynamoelektrischen Maschine (10) eine Mehrzahl von Materiallagen aufweist, wobei die Materiallagen einen derartigen Eisengehalt aufweisen, dass eine Hystereseziffer von < 1 W/kg erreichbar ist.

5. Antrieb nach einem der vorhergehenden Ansprüche, wobei eine Materiallage derart dünn ausgeführt ist, dass eine Wirbelstromziffer von < 0,4 W/kg erreichbar ist.

6. Antrieb nach einem der vorhergehenden Ansprüche, wobei die Materiallagen derart ausgebildet sind, dass eine Polarisierbarkeit B25 der Materiallagen > 1,6 T ist.

7. Antrieb nach einem der vorhergehenden Ansprüche, wobei das Getriebe (12) ein Schraubgetriebe oder ein Zahnradgetriebe oder eine Kombination aus Schraubgetriebe und Zahnradgetriebe ist.

8. Antrieb nach einem der vorhergehenden Ansprüche, wobei das Getriebe (12) als Schneckengetriebe mit wenigstens einer Getriebestufe ausgebildet ist.

9. Antrieb nach einem der vorhergehenden Ansprüche, wobei das Getriebe (12) genau eine Getriebestufe aufweist.

10. Antrieb nach einem der vorhergehenden Ansprüche, wobei das Getriebe (12) ein Übersetzungsverhältnis zwischen 60 und 250 aufweist.

11. Antrieb nach einem der vorhergehenden Ansprüche, wobei ein Zahnrad (9) des Getriebes (12) um einen Winkel (α) von < 360° bewegbar ist.

12. Antrieb nach einem der vorhergehenden Ansprüche, wobei das Zahnrad (9) des Getriebes (12) um einen Winkel (α) von < 180° bewegbar ist.

13. Roboterachse (11), aufweisend einen Antrieb nach einem der Ansprüche 1 bis 12, wobei die Roboterachse um einen Winkel (α) von < 360° bewegbar ist.

14. Roboterachse nach Anspruch 13, wobei die Roboterachse um einen Winkel (α) von < 180° bewegbar ist.

15. Roboter (1), insbesondere kollaborativer Roboter, aufweisend eine Roboterachse (11) nach einem der Ansprüche 13 oder 14.
